# EUROPÄISCHE PATENTSCHRIFT

(11) **EP 1 763 979 B1**
(45) Veröffentlichungstag und Bekanntmachung des Hinweises auf die Patenterteilung: **04.06.2014**
(21) Anmeldenummer: 06018911.5
(22) Anmeldetag: 09.09.2006
(51) Int. Cl.: A01B 29/04

(54) **Landwirtschaftliche Bodenwalze**
Agricultural ground roller
Rouleau agricole de sol

(30) Priorität: 17.09.2005 DE 102005044570; 06.07.2006 DE 102006031276
(43) Veröffentlichungstag der Anmeldung: 21.03.2007
(73) Patentinhaber: Amazonen-Werke H. Dreyer GmbH & Co. KG, 49205 Hasbergen (DE)
(72) Erfinder: Steen, Rüdiger, 27798 Hude (DE)

(56) Entgegenhaltungen:
- EP-A2- 0 365 050
- DE-A1- 4 018 366
- DE-A1- 10 307 396

## Beschreibung

Die Erfindung betrifft eine landwirtschaftliche Bodenwalze gemäß des Oberbegriffes des Patentanspruches 1.

Eine derartige Bodenwalze ist beispielsweise in der DE 103 07 396 A1 beschrieben. Diese landwirtschaftliche Bodenwalze hat sich in der Praxis bewährt. Die einzelnen Reifenelemente dieser Bodenwalze sind mit Schwingen an einem Tragrahmen angeordnet, so dass die einzelnen Reifenelemente sich gegeneinander bewegen können und die Reifenelemente können sich der Bodenoberfläche anpassen, so dass eine gleichförmige Bodenverdichtung erreicht wird. Die Reifenelemente sind mit einem bestimmten Luftdruck beaufschlagt. Zwischen den einzelnen Schwingen der Reifenelemente und dem Rahmen sind als Hydraulikzylinder ausgebildete Ausgleichselemente angeordnet, die über Leitungen miteinander verbunden sind, so dass sie ein Druckausgleichssystem bilden. Die Aufhängung der Reifenelemente mit einzelnen Schwingen am Rahmen ist relativ aufwendig hat jedoch den Vorteil, dass sich die einzelnen Reifenelemente sehr gut auch auf unebenen Bodenoberflächen dieser unebenen Bodenoberfläche anpassen können.

Wenn eine relativ ebene Bodenoberfläche vorliegt, die verdichtet werden muss, ist nur eine geringe Anpassungsmöglichkeit der Reifenaufstandsfläche, die von den einzelnen Reifenelementen gebildet wird, erforderlich.

Der Erfindung liegt die Aufgabe zugrunde, eine einfachere und preiswertere Bodenwalze vorzuschlagen, um dennoch eine Anpassungsmöglichkeit der einzelnen Reifenelemente an die Bodenoberfläche und einen gleichmäßigen Bodendruck an den Walzenaufstandsflächen der Reifenelemente zu erreichen.

Diese Aufgabe wird erfindungsgemäß dadurch gelöst, dass die Luftbefüllelemente der einzelnen Gummireifenelemente in Art eines Druckausgleichssystems über Verbindungsleitungen miteinander verbunden sind. Infolge dieser Maßnahmen kann ein Luftaustausch zwischen den einzelnen Reifenelementen in Art eines Druckausgleichssystems zwecks Anpassung der Reifenelemente an die Bodenoberfläche erfolgen. Es herrscht so immer quasi der gleiche Luftdruck in jedem Reifen, auch wenn die Bodenwalze auf einer unebenen Bodenoberfläche eingesetzt wird, d.h. die Luft von einer Bodenerhöhung aus dem betreffenden Reifenelement herausgedrückt wird und sich auf die anderen Reifenelemente verteilt. Somit wird ein gleichmäßiger Bodendruck an jeder Walzenaufstandsfläche der Reifenelemente der Bodenwalze auf dem Boden erreicht. Dieser gleichmäßige Bodendruck an jeder Walzenaufstandfläche ist die Voraussetzung um eine hohe Fahrgeschwindigkeit mit der Bodenwalze verwirklichen zu können. Durch die Verbindung der einzelnen Reifenelemente über die Verbindungsleitungen können sich die Reifen dem Boden anpassen und die Luft verdrängen. Die Reifenelemente sind starr auf einer Achse montiert und durch das Eindrücken der Reifenelemente wird eine Anpassung an die Kontur der Bodenoberfläche bei gleichem Bodendruck an jeder Walzenaufstandfläche erreicht.

Um den Reifenluftdruck an die jeweiligen Einsatzverhältnisse einfach und bequem anpassen zu können, ist vorgesehen, dass an die Luftbefüllelemente ein Druckregelsystem angeschlossen ist.

Um zu verhindern, dass die Verbindungsleitungen zwischen den einzelnen Reifenelementen während des Einsatzes beschädigt werden, und so das Druckausgleichssystem außer Funktion gesetzt wird, ist vorgesehen, dass die Verbindungsleitungen zwischen den einzelnen Reifenelementen geschützt verlegt sind.

Hierbei kann vorgesehen sein, dass die Verbindungsleitungen zumindest teilweise durch die Achswelle hindurchgeführt sind.

Damit gewährleistet ist, dass immer ein ausreichender Luftdruck in den Reifenelementen vorhanden ist, damit die Seitenflanken der Reifenelemente nicht von den Felgen gedrückt werden, ist vorgesehen, dass den Gummireifenelementen Druckbegrenzungsventile zugeordnet sind. Hierdurch wird sichergestellt, dass der Luftdruck in dem jeweiligen Reifenelement nicht unter einem Mindestdruck absinkt, der erforderlich ist, dass die Reifenseitenwände sich nicht von den Felgen lösen. Somit kann der Luftdruck also nicht unter diesen erforderlichen Mindestdruck abgesenkt werden.

In einfacher Weise sind die Druckbegrenzungsventile den Luftbefüllelementen zugeordnet.

Weitere Einzelheiten der Erfindung sind der Beispielsbeschreibung und den Zeichnungen zu entnehmen. Hierbei zeigen
- Fig. 1: die Bodenwalze im Schnitt und in Prinzipdarstellung,
- Fig. 2: eine weitere Bodenwalze im Schnitt und in Prinzipdarstellung,
- Fig. 3: die Anordnung der drehfreien Druckübergabestelle und
- Fig. 4: eine weitere Bodenwalze gemäß Fig. 2, jedoch mit einem jedem Gummireifenelement zugeordneten Mindestdruckventil.

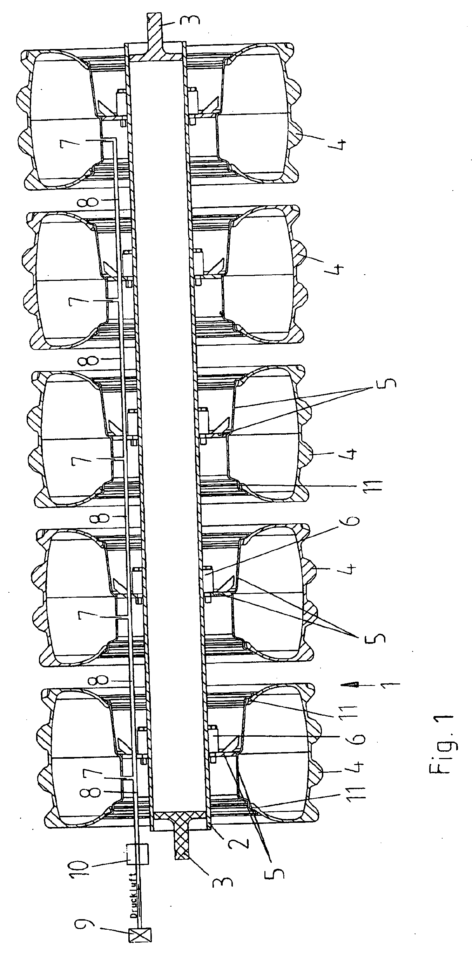

Die Bodenwalze 1 weist das zentrale Tragrohr 2 auf, das mit ihren Wellenenden 3 über nicht dargestellte Lagerelemente an einem Tragrahmen drehbar gelagert ist. Auf dem starren Tragrohr 2 sind die Gummireifenelemente 4 über ihre Felgen 5 beabstandet zueinander angeordnet. Die Felgen 5 sind mittels Verbindungselementen 6 mit dem Tragrohr 2 derart verbunden, dass die Reifenelemente 4 unverdrehbar gegenüber dem Tragrohr 2 und zueinander sowie in dem festgelegten Abstand zueinander auf dem Tragrohr angeordnet sind. Den Felgen 5 bzw. Reifenelementen 4 sind Luftbefüllelemente 7 zugeordnet um die Reifenelemente 4 mit dem gewünschten Luftdruck zu beaufschlagen. Die Luftbefüllelementen 7 der Reifenelemente 4 sind über Verbindungsleitungen 8, wie die Fig. 1 in prinzipieller Darstellung gezeigt, in Art eines Druckausgleichssystems miteinander verbunden. Dem Ende dieser Verbindungsleitungen 8 ist ein Ventil 9 zugeordnet, um das Druckausgleichssystem der Reifenelemente 4 und die Reifenelemente 4 selbst mit dem gewünschten Luftdruck beaufschlagen zu können. Die Verbindungsleitungen 8 zwischen den einzelnen Reifenelementen 4 sind geschützt verlegt. In nicht dargestellter Weise können die Verbindungsleitungen auch teilweise durch die Achswelle hindurchgeführt sein. Den Luftbefüllelementen 7 jedes Reifenelementes 4 ist zwischen den Reifenelementen 4 und der Verbindungsleitung 8 ein Druckbegrenzungsventil 10 zugeordnet. Dieses Druckbegrenzungsventil 10 ist jeweils so ausgelegt, dass der Luftdruck in jedem Reifenelement 4 nicht unter einem Mindestdruck, der erforderlich ist, dass die Reifenseitenwände 11 der Reifenelemente 4 sich nicht von den Felgen 5 lösen, abgesenkt werden kann.

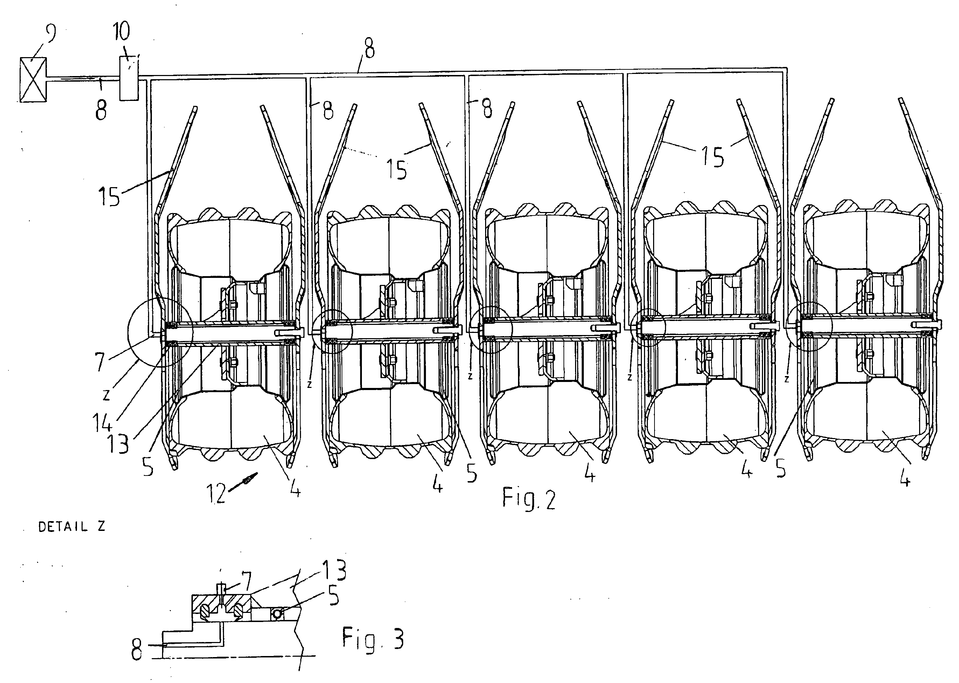

Die Bodenwalze 12 gemäß Fig. 2 unterscheidet sich von der Bodenwalze 1 gemäß Fig. 1 im Wesentlichen dadurch, dass die Reifenelemente 4 mit ihren Felgen 5 nicht auf einem starren Tragrohr, sondern auf einzelnen Lagerrohren 13 mittels einer Lagerung 14 drehbar an Haltearmen gelagert sind, die in nicht dargestellter Weise an einem Querträger des Walzenrahmens befestigt sind. Den Felgen 5 bzw. Reifenelementen 4 sind Luftbefüllelemente 7 zugeordnet, um die Reifenelemente 4 mit dem gewünschten Luftdruck zu beaufschlagen. Die Luftbefüllelemente 7 der Reifenelemente 4 sind über Verbindungsleitungen die in nicht dargestellter Weise an den Haltearmen geschützt verlegt sind, wie in Fig. 2 in Prinzipdarstellung gezeigt ist, in Art eines Druckausgleichsystems miteinander verbunden sind. Dem Ende dieser Verbindungsleitung 8 ist ein Ventil 9 zugeordnet, um das Druckausgleichssystem der Reifenelemente 4 und die Reifenelemente 4 selbst mit dem gewünschten Luftdruck beaufschlagen zu können. Die Luftbefüllelemente 7 ist zwischen den Reifenelementen und dem Befüllventil 9 ein Druckbegrenzungsventil 10 zugeordnet. Dieses Druckbegrenzungsventil ist jeweils so ausgelegt, dass der Luftdruck in jedem Reifenelement 4 nicht unter einem Mindestdruck erforderlich ist, dass die Reifenseitenenden 11 der Reifenelementen 4 sich nicht von den Felgen lösen, abgesenkt werden kann.

Die Fig. 3 zeigt als Detail Z den Druckübergabebereich zwischen einem rotierenden und dem drehenden Teil.

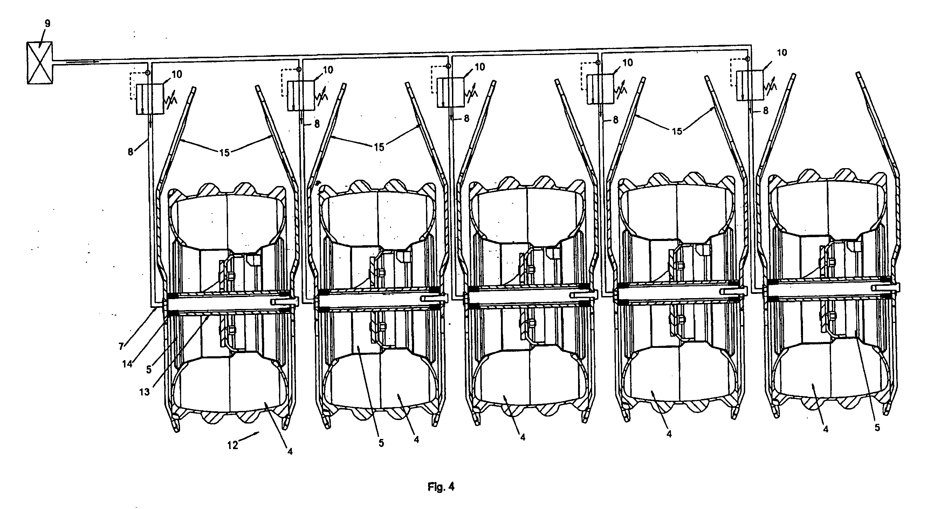

Die Bodenwalze 12 gemäß Fig. 4 unterscheidet sich von der Bodenwalze gemäß Fig. 2 durch die Ausgestaltung des Druckbegrenzungsventils als Mindestdruckventil 10 und der Anordnung dieses Ventils 10 zwischen dem Befüllanschluss 9 des jeweiligen Gummireifenelementes 7 und der die einzelnen Gummireifenelemente 7 verbindenden Verbindungsleitungen 8. Jedem Gummireifenelement 7 ist somit ein Mindestdruckventil 10 zugeordnet. Hierdurch wird sichergestellt, dass einerseits der Druck in einem Gummireifenelement 7 nicht unter einem festgelegten Mindestdruck absinken kann und andererseits falls ein Gummireifenelement 7 beschädigt ist und der Luftdruck in dem beschädigten Gummireifenelement 7 unter dem festgelegten Mindestdruck absinkt oder überhaupt nicht mehr vorhanden ist, dass dann das Ausgleichssystem bei den übrigen intakten Gummireifenelementen 7 aufrechterhalten bleibt.

## Patentansprüche

1. Landwirtschaftliche Bodenwalze mit mehreren nebeneinander auf einer Achswelle angeordneten und auf dem Boden abrollenden und mit Luftdruck beaufschlagten Gummireifenelementen, wobei den Gummireifenelementen Luftbefüllelemente zugeordnet sind, **dadurch gekennzeichnet, dass** die Luftbefüllelemente (7) der einzelnen Gummireifenelemente (4) in Art eines Druckausgleichssystems über Verbindungsleitungen (8) miteinander verbunden sind.

2. Bodenwalze nach Anspruch 1, **dadurch gekennzeichnet, dass** an die Luftbefüllelemente (7) ein Druckregelsystem angeschlossen ist.

3. Bodenwalze nach Anspruch 1, **dadurch gekennzeichnet, dass** die Verbindungsleitungen (8) zwischen den einzelnen Reifenelementen (4) geschützt verlegt sind.

4. Bodenwalze nach einem oder mehreren der vorstehenden Ansprüche, **dadurch gekennzeichnet, dass** die Verbindungsleitung zumindest teilweise durch die Achswelle hindurch geführt sind.

5. Bodenwalze nach einem oder mehreren der vorstehenden Ansprüche, **dadurch gekennzeichnet, dass** den Gummireifenelementen (4) Druckbegrenzungsventile (10) zugeordnet sind.

6. Bodenwalze nach einem oder mehreren der vorstehenden Ansprüche, **dadurch gekennzeichnet, dass** die Druckbegrenzungsventile (10) den Luftbefüllungselementen (7) zugeordnet sind.

7. Bodenwalze nach einem oder mehreren der vorstehend genannten Ansprüche, **dadurch gekennzeichnet, dass** die Druckbegrenzungsventile als Mindestdruckventile (10) ausgebildet sind.

8. Bodenwalze nach Anspruch 7, **dadurch gekennzeichnet, dass** jedem Gummireifenelement (7) ein Mindestdruckventil (10) zugeordnet ist.

9. Bodenwalze nach einem oder mehreren der vorstehenden Ansprüche, **dadurch gekennzeichnet, dass** die Mindestdruckventile (10) jeweils zwischen dem Befüllanschluss (9)des jeweiligen Gummireifenelementes (7) und der die einzelnen Gummireifenelementen (7) und der die einzelnen Gummireifenelementen (7) verbindenden Verbindungsleitung (8) angeordnet sind.

## Claims

1. Agricultural ground roller with a plurality of rubber tyre elements which are arranged next to one another on an axle shaft, roll along the ground and are acted upon by atmospheric pressure, wherein the rubber tyre elements are assigned air-filling elements, **characterized in that** the air-filling elements (7) of the individual rubber tyre elements (4) are connected to one another via connecting lines (8) in the manner of a pressure-equalizing system.

2. Ground roller according to Claim 1, **characterized in that** a pressure-regulating system is connected to the air-filling elements (7).

3. Ground roller according to Claim 1, **characterized in that** the connecting lines (8) are laid in a protected manner between the individual tyre elements (4).

4. Ground roller according to one or more of the preceding claims, **characterized in that** the connecting lines are at least partially guided through the axle shaft.

5. Ground roller according to one or more of the preceding claims, **characterized in that** the rubber tyre elements (4) are assigned pressure-limiting valves (10).

6. Ground roller according to one or more of the preceding claims, **characterized in that** the pressure-limiting valves (10) are assigned to the air-filling elements (7).

7. Ground roller according to one or more of the abovementioned claims, **characterized in that** the pressure-limiting valves are designed as minimum pressure valves (10).

8. Ground roller according to Claim 7, **characterized in that** each rubber tyre element (4) is assigned a minimum pressure valve (10).

9. Ground roller according to one or more of the preceding claims, **characterized in that** the minimum pressure valves (10) are in each case arranged between the filling connection (9) of the respective rubber tyre element (4) and the connecting line (8) connecting the individual rubber tyre elements (4).

## Revendications

1. Rouleau agricole de sol avec plusieurs éléments de pneumatiques en caoutchouc disposés les uns à côté des autres sur un arbre d'essieu et roulant sur le sol et soumis à une pression d'air, dans lequel des éléments de remplissage d'air sont associés aux éléments de pneumatiques en caoutchouc, **caractérisé en ce que** les éléments de remplissage d'air (7) des éléments individuels de pneumatiques en caoutchouc (4) sont raccordés les uns aux autres à la manière d'un système d'équilibrage de pression par des conduites de raccordement (8).

2. Rouleau de sol selon la revendication 1, **caractérisé en ce qu'**un système de réglage de pression est raccordé aux éléments de remplissage d'air (7).

3. Rouleau de sol selon la revendication 1, **caractérisé en ce que** les conduites de raccordement (8) sont posées sous protection entre les éléments de pneumatiques individuels (4).

4. Rouleau de sol selon une ou plusieurs des revendications précédentes, **caractérisé en ce que** les conduites de raccordement sont menées au moins partiellement à travers l'arbre d'essieu.

5. Rouleau de sol selon une ou plusieurs des revendications précédentes, **caractérisé en ce que** des soupapes de limitation de pression (10) sont associées aux éléments de pneumatiques en caoutchouc (4).

6. Rouleau de sol selon une ou plusieurs des revendications précédentes, **caractérisé en ce que** les soupapes de limitation de pression (10) sont associées aux éléments de remplissage d'air (7).

7. Rouleau de sol selon une ou plusieurs des revendications précédentes, **caractérisé en ce que** les soupapes de limitation de pression se présentent sous la forme de soupapes à pression minimale (10).

8. Rouleau de sol selon la revendication 7, **caractérisé en ce qu'**une soupape à pression minimale (10) est associée à chaque élément de pneumatique en caoutchouc (4).

9. Rouleau de sol selon une ou plusieurs des revendications précédentes, **caractérisé en ce que** les soupapes à pression minimale (10) sont respectivement disposées entre le raccord de remplissage (9) de l'élément de pneumatique en caoutchouc respectif (4) et la conduite de raccordement (8) raccordant les éléments de pneumatiques en caoutchouc individuels (4).
